# EUROPÄISCHE PATENTSCHRIFT

(11) **EP 2 319 285 B1**
(45) Veröffentlichungstag und Bekanntmachung des Hinweises auf die Patenterteilung: **13.02.2013**
(21) Anmeldenummer: 10014192.8
(22) Anmeldetag: 02.11.2010
(51) Int. Cl.: A01B 79/00, A01C 17/00

(54) **Verfahren zum Verteilen von Mineraldünger auf dem Feld und im Vorgewende mittels Zweischeibenstreuern**
Method for distributing mineral fertiliser on a field and headland using centrifugal distributors
Procédé de répartition d'engrais minéral sur le champ et dans le bout de champ à l'aide d'épandeurs à double disque

(30) Priorität: 04.11.2009 DE 102009051972
(43) Veröffentlichungstag der Anmeldung: 11.05.2011
(73) Patentinhaber: RAUCH LANDMASCHINENFABRIK GMBH, D-76547 Sinzheim (DE)
(72) Erfinder: Rauch, Norbert, D-76547 Sinzheim (DE); Stöcklin, Volker, D-77975 Ringsheim (DE); Dingeldey, Nico, D-64397 Modautal (DE)
(74) Vertreter: Lasch, Hartmut

(56) Entgegenhaltungen:
- EP-A1- 0 578 988
- EP-A1- 1 618 774
- EP-A1- 1 692 929
- EP-A2- 1 692 928
- DE-A1- 19 856 926

## Beschreibung

Die Erfindung betrifft ein Verfahren zum Verteilen von Mineraldünger auf dem Feld und im Vorgewende mittels Zweischeibenstreuern, deren rotierenden Streuscheiben der Mineraldünger aus einem Vorratsbehälter über Dosierorgane aufgegeben wird, wobei im Feld durch Anschlussfahren in parallelen Fahrgassen die etwa halbkreisförmige Düngerverteilung mit derjenigen der benachbarten Fahrgasse überlappt und in der Überlappungszone zwischen der halbkreisförmigen Düngerverteilung im Feld und der Düngerverteilung im Vorgewende die Düngerablage mittels GPS-gesteuerter Dosiercomputer, die die Dosierorgane mittels GPS-Signalen bei der Fahrt aus dem Feld in das Vorgewende ausschalten und bei der Fahrt vom Vorgewende in das Feld einschalten, unterbrochen bzw. wieder aufgenommen wird.

In der Landwirtschaft werden zur gezielten Ernährung der Pflanzen überwiegend Mineraldünger eingesetzt. Die Verteilung des in der Regel in Kornform vorliegenden Mineraldüngers erfolgt mit Mineraldüngerstreuern, wobei sich Zweischeibenstreuer weltweit durchgesetzt haben. Diese Mineraldüngerstreuer verteilen mittels rotierender Streuscheiben den Mineraldünger auf das Feld. Dieses Verfahren ermöglicht große Arbeitsbreiten bis zu 48m und mehr und Streubreiten bis zu 70m. Die Mineraldüngerstreuer sind in ihrer Handhabung einfach, benötigen keine aufwändigen Verteilergestänge wie Pneumatikdüngerstreuer, sind im Anschaffungspreis günstig und ermöglichen selbst auf großen Arbeitsbreiten eine gute Düngerverteilung.

Nachteilig ist, dass die Düngerverteilung in einem halbkreisförmigen Bogen auf der Feldoberfläche erfolgt, wobei die Streumenge innerhalb des Halbkreises von einem Maximum in der Mitte jeweils nach rechts und links bis auf null absinkt. Für eine gleichmäßige Düngerverteilung auf dem Feld ist deshalb während des Ausstreuens eine Fahrweise erforderlich, bei der sich die Halbkreise überlappen. Die auf der Feldoberfläche auf einem Halbkreis abgelegte Düngermenge weist z.B. eine sich quer zu Fahrtrichtung erstreckende Breite (= Streubreite) von 48m auf. Die für eine gleichmäßige Verteilung nutzbare, so genannte Arbeitsbreite beträgt jedoch nur 24m. Eine große, idealerweise doppelte Überlappung (Streubreite ist doppelt so groß, wie die Arbeitsbreite) ist wünschenswert, da dadurch eine gute Düngerverteilung erreicht wird. Bei einer großen Streubreite ergibt sich auch eine große Wurfweite (Abstand des Schwerpunktes der halbkreisförmigen Düngerverteilung auf der Feldoberfläche zur Streuscheibenmitte). Die Streubreite und damit auch die Wurfweite ist von den physikalischen Eigenschaften des Düngers, der Konstruktion (Länge und Anstellung der Wurfflügel, etc.) und der Drehzahl der Streuscheiben abhängig.

Zur Optimierung der Feldarbeiten, wie z.B. Pflanzenschutzmaßnahmen oder Düngung, werden auf den Feldern so genannte Fahrgassen eingerichtet, in denen die Maschinen wiederholt fahren. Der Abstand solcher untereinander parallelen Fahrgassen kann von 12m bis über 48m betragen, was der von dem Düngerstreuer einzuhaltenden Arbeitsbreite entspricht. Die großen, vorteilhaften Streubreiten (= doppelte Arbeitsbreiten) für eine gute Düngerverteilung im Feld führen jedoch zu Problemen an den Feldgrenzen. Für die fahrgassenparallelen Feldgrenzen sind sogenannte Grenzstreueinrichtungen erfolgreich im Einsatz.

Im so genannten Vorgewende wird eine Fahrgasse quer (in der Regel 90°) zu den Feldfahrgassen am Anfang und Ende des Feldes eingerichtet. Die Breite dieses Vorgewendes entspricht der im Feld vorliegenden Arbeitsbreite. Auch die Feldränder des Vorgewendes werden mit einer Grenzstreueinrichtung abgestreut.

Problemtisch ist die Düngerverteilung bei der Feldausfahrt in das Vorgewende im Übergangsbereich zur Düngerverteilung im Vorgewende und bei der Feldeinfahrt (Vorgewende - Feldinneres). Bei der heute üblichen Arbeitsweise und dem üblicheren Vorhandensein nur einer Vorgewendefahrgasse schaltet der Landwirt die Dosierorgane im Traktor deutlich vor dem Einbiegen in die Vorgewendefahrgasse ab, da bei der heute üblichen Fahrgeschwindigkeit eine hohe Konzentration auf den Einbiegevorgang erforderlich ist. Neuere Erkenntnisse haben jedoch ergeben, dass dabei eine Unterdüngung im Feld festzustellen ist, weil beim Abschalten der Dosierorgane die dreidimensionale halbkreisförmige Düngerverteilung nur mit ihren außenliegenden Bereichen (kleine Streumenge) die Düngerverteilung im Vorgewende erreicht hat, nicht aber das Zentrum (große Streumenge) der halbkreisförmigen Düngerverteilung, so dass es zu einer Unterdüngung kommt.

Bei dem bekannten Verfahren nach dem einleitenden Absatz und dem Oberbegriff des Anspruchs 1 (EP 1 692 929 A1) wird vorgeschlagen, mittels Dosiercomputer den Ein- und Ausschaltpunkt der Dosierorgane über GPS zu steuern. Im Übergangsbereich vom Feld zum Vorgewende soll ein über- oder unterdüngter Bereich, jedoch angenähert an eine gleichmäßige Verteilung entstehen. Erfahrungsgemäß entsteht bei der Feldausfahrt eine Unterdüngung, wenn zu weit weg von der Düngerverteilung im Vorgwende (größerer Abstand zur Feldgrenze) und eine Überdüngung, wenn zu weit im Vorgewende (kürzerer Abstand zur Feldgrenze) ausgeschaltet wird. Analog entsteht eine Über- und Unterdüngung bei der Feldeinfahrt. Bei dem vorgenannten Stand der Technik liegt der Ausschaltpunkt der Dosierorgane bei der Feldausfahrt in das Vorgewende jenseits der Begrenzungslinie zwischen beiden innerhalb des Vorgewendes und der Einschaltpunkt bei der Feldeinfahrt aus dem Vorgewende jenseits der Begrenzungslinie im Feldinneren. Ein- und Ausschaltpunkt sind bezüglich der Feldgeometrie in einem Rechner hinterlegt und GPS-gesteuert. Die Ein- und Ausschaltpunkte sollen durch Streuversuche oder durch ein Optimierungs- bzw. Simulationsprogramm ermittelt werden. Wie dies im einzelnen zu geschehen hat, lässt dieser Stand der Technik offen. Intensive Forschungen und Simulationen der Überlappungen der jeweils halbkreisförmigen Düngerverteilungen aus der Feldausfahrt und der Feldeinfahrt haben u.a. eine hohe Abhängigkeit der optimalen Ein- und Ausschaltpunkte von den physikalischen Eigenschaften ergeben. Diese Zusammenhänge sind in der Patentschrift nicht berücksichtigt. Auch ist die Definition der Lage der Ein- und Ausschaltpunkte als Begrenzungslinie des Streubildes nach vorne in Fahrtrichtung zumindest unpräzise. Ebenfalls ist die Darstellung des Streufächers im Verhältnis zum gezeigten Zweischeibendüngerstreuer falsch, da das halbkreisförmige Streubild in der Fahrgasse, je nach Dünger ca. 8m bis 18m hinter dem Zweischeibenstreuer liegt.

Die EP 1 692 928 A2 beschreibt ein elektronisches Management-System für Landmaschinen zum positionsgenauen Einleiten von Schalt- und Stellvorgängen mit einem geographischen Modul zum Ermitteln der aktuellen Position und Informationen über Positionen von markanten Felddaten, Ausbringmengen, Feldgrenzen und bearbeitete und/oder Sperrflächen enthält und mit einem maschinenspezifischen Modul, welches maschinenspezifische Daten enthält. Das geographische Modul teilt dem maschinenspezifischen Modul die geographischen Informationen in Echtzeit mit und das maschinenspezifische Modul generiert hieraus in Echtzeit die maschinenspezifischen Schalt- und Stellvorgänge und sendet entsprechende Signale an die jeweiligen Schalt- und Stellemente. Bei einem Düngerstreuer sind dies vor allem die Schaltelemente für die Dosierorgane. Welche maschinenspezifischen Informationen das maschinenspezifische Modul enthält, lässt das Dokument D1 offen.

Die EP 1 618 774 A1 beschreibt eine Streuscheibe für Schleuderdüngerstreuer, die wahlweise auf Normalstreuen oder auf Grenzstreuen eingestellt werden können.

Ausgehend von dem genannten Stand der Technik liegt der Erfindung die Aufgabe zugrunde, je nach praktizierter Fahrweise des Landwirtes und Anspruch an eine gute Verteilung des_Düngers eine Unter- oder Überdüngung im Übergangsbereich Feldausfahrt in das Vorgewende und eine Unter- oder Überdüngung im Übergangsbereich Feldeinfahrt aus dem Vorgewende zu minimieren.

Die Lösung der Erfindungsaufgabe besteht bei einem Verfahren gemäß dem Oberbegriff des Anspruchs 1 darin, dass im Dosiercomputer zwei Strategien je nach praktizierter Fahrweise des Landwirtes und Anspruch an eine gute Verteilung des Düngers für die Ein- und Ausschaltung der Dosierorgane hinterlegt und wahlweise aufrufbar sind, von denen erstere einen GPS-gesteuerten Ausschalt- und Einschaltpunkt einstellt und eine aufgrund simulierter Rechenverfahren pro Düngersorte, Streuscheibentyp, Scheibendrehzahl und Arbeitsbreite ermittelte optimierte Düngerverteilung von der Feldausfahrt in das Vorgewende und bei der Einfahrt von diesem in das Feld ermöglicht und letztere einen GPS-gesteuerten Ausschaltpunkt einstellt, der die räumlichen Verhältnisse aus Traktorlänge, Streuerlänge und Einbiegeradius bis zur Vorgewendefahrgasse berücksichtigt und den Einschaltpunkt nach der ersten Strategie auf die optimierte Überlappung der Feldeinfahrt zum Vorgewende einstellt.

Mit der ersten Strategie wird durch ein komplexes Rechenverfahren der Ausschaltpunkt pro Düngersorte, Streuscheibentyp und Drezahl der Streuscheiben ermittelt. Aufgrund neuer Erkenntnisse liegt der optimierte Ausschaltpunkt der halbkreisförmigen Verteilung für eine minimierte Unter- und Überdüngung bei etwa 1 bis 8m vor der Breite des Vorgewende. Aufgrund der hohen Wurfweite der Zweischeibenstreuer (Abstand des Schwerpunktes der halbkreisförmigen Düngerverteilung auf der Feldoberfläche zur Streuscheibenmitte) von ca. 8 bis 18m befindet sich der Traktor in der Regel auch bei großen Breiten des Vorgewendes dann bereits hinter der Vorgewendefahrgasse, also nahe der Feldgrenze. Die Dosierorgane werden also erst abgeschaltet, wenn das Traktor-Streuergespann in Verlängerung der Feldfahrgasse bis nahe an die Feldgrenze heranfährt, dann parallel zur Vorgewendefahrgasse fährt und dann kehrt, um in die nächste Feldfahrgasse einzufahren. Nach einer gewissen Wegstrecke ist der ebenfalls mittels eines Rechenverfahrens ermittelte optimale Einschaltpunkt erreicht und werden die Dosierorgane wieder in Betrieb gesetzt. Die gleiche Fahrweise für eine optimale Düngerverteilung lässt sich auch durch die Anlage von zwei parallelen Vorgewendefahrgassen anwenden, wie sie bei gezogenen Zweischeibenstreuern aufgrund der Baulänge des Gespanns eigentlich zwingend notwendig wäre, oder auch dann, wenn entlang des Vorgewendes ein Weg verläuft, auf den der Traktor einbiegt, entlang fährt und von dem er wieder in Richtung zur nächsten Feldfahrgasse abbiegt.

Heutzutage und üblicherweise legt der Landwirt nur eine Vorgewendefahrgasse an. Dabei fährt er dann mit dem traktor-Streuer-Gespann bei der Feldausfahrt direkt in die Vorgewendefahrgasse. Aufgrund der hohen Wurfweiten heutiger moderner Zweischeibenstreuer kann jedoch der optimale für eine geringe Unterdüngung erforderliche Ausschaltpunkt nicht erreicht werden. Um auch hier aufgrund der räumlichen Verhältnisse zu einer wenn auch nicht zur ersten Strategie vergleichbar optimalen, jedoch dennoch möglichen Minimierung der Unterdüngung zu gelangen, wird mit der zweiten Strategie durch Eingabe der Traktorlänge, Streuerlänge und des Einbiegeradius von den Feldfahrgassen bis zur Vorgewendefahrgasse der Ausschaltpunkt ermittelt und über GPS und den Dosiercomputer eingestellt. Hierdurch wird also erreicht, dass der Landwirt aufgrund der erforderlichen Konzentration auf den Einlenkvorgang nicht von diesem abgelenkt wird, also zu früh abschaltet, sondern durch die Automatisierung der GPS-Abschaltung der spätestmögliche Ausschaltpunkt und damit eine minimierte Unterdüngung erreicht wird.

Der weniger kritische Einschaltpunkt - es ist ausreichend Platz beim Einfahren in die Feldfahrgasse vorhanden - wird auf die mittels eines Rechenverfahrens, das die jeweiligen physikalischen Eigenschaften der Düngersorte, den Streuscheibentyp und die Drehzahl der Streuscheibe sowie die Arbeitsbreite berücksichtigt, optimierte Überlappung der Feldeinfahrt zum Vorgewende eingestellt.

In bevorzugter Ausführung ist vorgesehen, dass bei der ersten Strategie die optimierten Ausschalt- und Einschaltpunkte als Abstand von der Feldgrenze des Vorgewendes bis zur Streuscheibenmitte in Abhängigkeit von der in den Dosiercomputer einzugebenden mittleren Wurfweite (= Abstand zwischen dem Schwerpunkt des gegen die Fahrtrichtung auf der Feldoberfläche liegenden Streufächers und der Mitte der Streuscheiben des Zweischeibenstreuers) für jeden Düngertyp, Streuscheibentyp und jede Arbeitsbreite intern ermittelt und eingestellt und bei externer Ermittlung in den Dosiercomputer eingegeben und eingestellt wird.

Die als Abstand zwischen der Streuscheibenmitte und dem Schwerpunkt des auf dar Feldoberfläche liegenden Streufächers bezeichnete Wurfweite ist maßgeblich abhängig von der Düngersorte (Gleitverhalten auf der Streuscheibe und Flugeigenschaften nach dem Abschleudern von der Streuscheibe) und dem Leistungsvermögen der Streuscheiben.

Die Dosierorgane werden am Aus- und Einschaltpunkt mehr oder weniger schlagartig ein- bzw. abgeschaltet. Als Dosierorgane bei Scheibendüngerstreuern werden heute meist schiebergesteuerte Dosieröffnungen eingesetzt. Der Antrieb der Dosierschieber kann hydraulisch oder elektrisch erfolgen. Bei elektrischen Antrieben beträgt die Schließ- und Öffnungszeit mehrere Sekunden, z.B. 5s von "voll auf" bis "zu" bzw. umgekehrt, wodurch sich ein weicherer Übergang der Überlappung ergibt. Da sich in diesem Zeitraum der Traktor mit dem Streuer fortbewegt, ist bei beiden Strategien vorgesehen, dass zur Ermittlung des jeweiligen Einund Ausschaltpunktes zusätzlich die Fahrgeschwindigkeit und die beim Streuen aktuelle Dosieröffnung berücksichtigt wird.

Bei der zweiten Strategie werden gemäß einem bevorzugten Ausführungsbeispiel auch bei einem gezogenen Streuer die Länge des Streuergespanns (Vorderachse Traktor-Mitte Streuscheiben) und der Einbiegeradius in den Dosiercomputer eingegeben.

Gemäß einem weiteren Ausführungsbeispiel ist vorgesehen, dass die Drehzahl der dem Feld zugekehrten Streuscheibe erhöht wird.

Durch eine größere halbe Arbeitsbreite zum Feld hin wird der später bei der Düngerverteilung im Feld im Übergangsbereich von der Feldfahrgasse zur Vorgewendegasse entstehende unterdüngte Bereich zusätzlich mit Dünger versorgt.

Wie beim Abstreuen der Feldränder, wird auch beim Abstreuen der Feldfahrgasse des Vorgewendes der Zweischeibenstreuer zur Feldgrenze auf Grenzstreuen eingestellt.

In einer weiteren Ausbildung der Erfindung ist vorgesehen, dass mit ausreichendem Abstand zur Fahrgasse des Vorgewendes die Drehzahl der Streuscheiben merklich abgesenkt wird.

Hierdurch wird erreicht, dass im unterdüngten Übergangsbereich die Arbeitsbreite und die Wurfweite reduziert werden, so dass der dann entstehende Streufächer sich in den bereits liegenden Streufächer bei üblicher Arbeitsbreite einschmiegt.

Der gleiche Effekt kann dadurch erreicht werden, dass zusätzlich der Aufgabepunkt des Düngers auf die Streuscheiben geändert wird. Zur Steigerung des Effektes können auch beide Maßnahmen zugleich ergriffen werden.

Um bei Einsatz dieser Maßnahmen eine Überdüngung im Zentrum zu vermeiden, wird zusätzlich die Dosiermenge reduziert.

Schließlich muss bei beiden Strategien Vorsorge dafür getragen werden, dass spätestens bei Erreichen der Fahrgasse im Vorgewende die Dosierorgane vollständig geschlossen sind, was mit den angegebenen Erfindungsmerkmalen gewährleistet ist.

Weitere Einzelheiten und Vorteile der Erfindung ergeben sich aus der nachfolgenden Beschreibung von in den Zeichnungen wiedergegebenen Ausführungsbeispielen. In der Zeichnung zeigen:
- Fig. 1.: in Vogelperspektive die Verhältnisse beim Streuen des Düngers am Feldende und im Vorgewende mit ei- nem Anbaustreuer;
- Fig. 2.: eine schematische Darstellung des Streuvorgangs mit einem Anbaustreuer bei der Feldausfahrt in das Vorgewende, bei der Fahrt im Vorgewende und bei der Feldeinfahrt aus dem Vorgewende;
- Fig. 3.: in Vogelperspektive die Verhältnisse bei der Feldausfahrt in das Vorgewende nach der ersten Strategie in einer ersten Ausführung;
- Fig. 4.: eine der Fig. 3 entsprechende Vogelperspektive in einer zweiten Ausführung;
- Fig. 5.: eine der Fig. 2 entsprechende Vogelperspektive in einer dritten Ausführung mit zwei Vorgewendefahr- gassen und
- Fig. 6.: eine der Fig. 5 entsprechende Darstellung mit ei- nem gezogenen Zweischeibenstreuer.

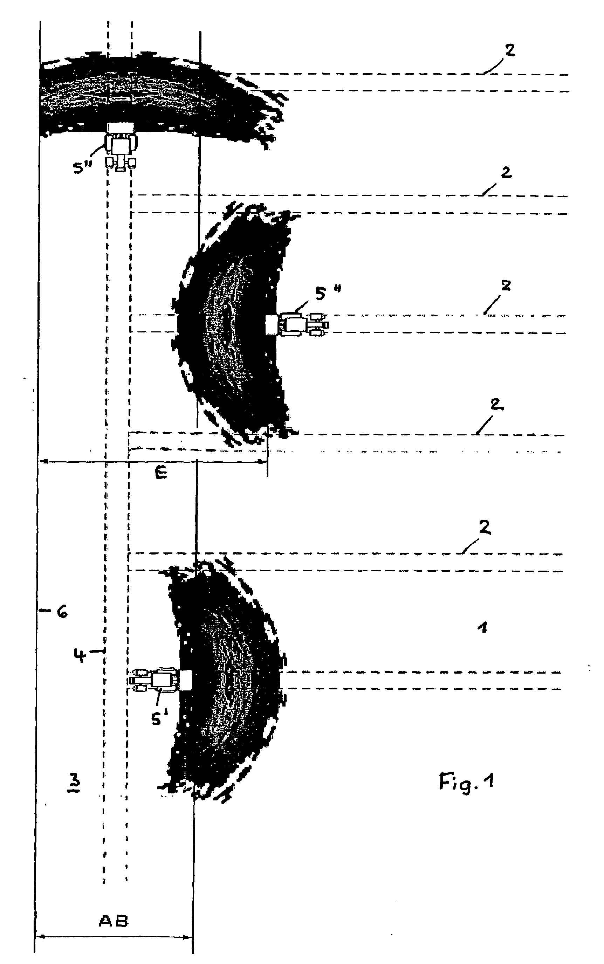

In Fig. 1 ist das Feld 1 mit den parallelen, jeweils im Abstand der Arbeitsbreite angelegten Fahrgassen 2 und das Vorgewende 3 mit einer Fahrgasse 4 gezeigt. Die Breite des Vorgewendes entspricht wiederum der Arbeitsbreite AB. Die Feldfahrgassen 2 münden im Vorgewende 3 in die Vorgewendefahrgasse 4.

Es ist ferner in Fig. 1 die etwa halbkreisförmige Düngerverteilung erkennbar, die der Traktor mit dem angebauten Zweischeibenstreuer hinter sich herzieht. Im Zentrum der Düngerverteilung liegt die größte Streumenge vor. Dieser Bereich ist hell wiedergegeben. Vom Zentrum nimmt die Streumenge nach außen (Schwärzung) bis auf null ab. Durch Anschlussfahren in benachbarten Fahrgassen - in Fig. 1 sind die Streufächer aus Gründen der besseren Übersicht durch zwei Fahrgassen voneinander getrennt - findet eine Überlappung benachbarter Streufächer und dadurch eine gleichmäßige Verteilung statt.

Das Streuergespann (Traktor und Anbaustreuer) befindet sich in der Position 5' bei der Feldausfahrt in das Vorgewende 3 und in der Position 5" beim Streuen im Feld nachdem es zuvor aus dem Vorgewende in die benachbarte Fahrgasse eingefahren ist. Die Position 5" entspricht dem Einschaltpunkt der Dosierorgane während die Position 5' (Feldausfahrt) dem Ausschaltpunkt der Dosierorgane entspricht. Dabei entsteht noch innerhalb des Feldes eine Unterdüngung.

Das Vorgewende 3 wird gesondert - vor oder nach der Düngerverteilung im Feld - abgestreut. Dies ist mit der Position 5"' des Streuergespanns angedeutet. Der Anbaustreuer ist auf Grenzstreuen eingestellt, so dass die halbkreisförmige Düngerverteilung zur Feldgrenze 6 hin steil abfällt und sich über die Arbeitsbreite im Vorgewende eine gleichmäßig hohe Düngerverteilung ergibt.

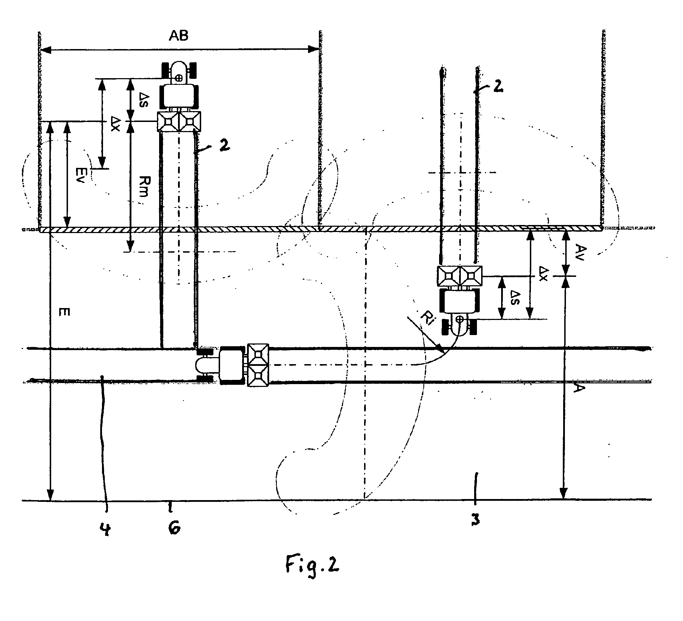

Fig. 2 zeigt in schematisierter Form die herkömmliche Fahrstrategie beim Übergang von einer Feldfahrgasse 2 zur benachbarten Fahrgasse 2 sowie die für die Ein- und Ausschaltpunkte maßgeblichen und in den Patentansprüchen genannten Parameter. An diese Fahrweise knüpft die zweite Strategie nach der Erfindung an. Für den Ein- und Ausschaltpunkt sind die räumlichen Verhältnisse (Traktorlänge, Streuerlänge und Einbiegeradius Ri) maßgeblich. Der Ausschaltpunkt befindet sich im Abstand A von der Feldgrenze bzw. im Abstand Av von der Vorgewendegrenze. Der festlegbare Ausschaltabstand Δx schließt den Abstand Δs (GPS-Antenne/Streuscheibenmitte) ein. Beim Einbiegen des Traktors mit dem Kurvenradius Ri in die Vorgewendefahrgasse werden die Dosierorgane GPS-gesteuert abgeschaltet. Bei der Feldeinfahrt schalten die Dosierorgane GPS-gesteuert im Abstand E von der Feldgrenze bzw. im Abstand Ev von der Vorgewendegrenze ein. Der Abstand E (GPS-Antenne zur Streuscheibenmitte) ist wiederum mit Δs bezeichnet. Wie aus Fig. 2 ersichtlich, lässt sich in Abhängigkeit von den räumlichen Verhältnissen der Einschaltpunkt so festlegen, dass der Schwerpunkt der Düngerverteilung im Bereich der Vorgewendegrenze im Feld liegt. In Fig. 2 ist der im Vorgewende fahrende Traktor mit Anbaustreuer beim Abstreuen des Vorgewendes gezeigt, wo er wiederum einen etwa halbkreisförmigen Streufächer hinter sich herzieht.

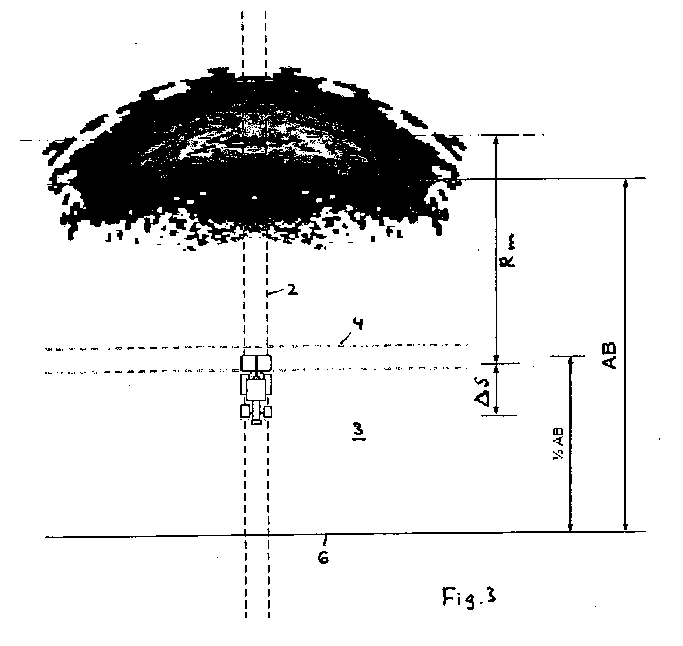

Fig. 3 zeigt die Fahrweise bei der ersten Strategie der Erfindung. Das Streuergespann fährt aus der Feldfahrgasse 2 bis in den Bereich oder über die Vorgewendefahrgasse 4 hinaus und erreicht damit jedenfalls den Ausschaltpunkt, der eine optimierte Düngerverteilung bei der Feldausfahrt beim Übergang vom Feld in das Vorgewende garantiert. Der Ausschaltpunkt hängt maßgeblich von der Wurfweite Rm (Abstand Streuscheibenmitte - Schwerpunkt der etwa halbkreisförmigen Düngerverteilung) und diese wiederum von der Düngersorte, dem Streuscheibentyp und der Drehzahl der Streuscheiben ab. Ferner geht die Arbeitsbreite in die Rechnung ein.

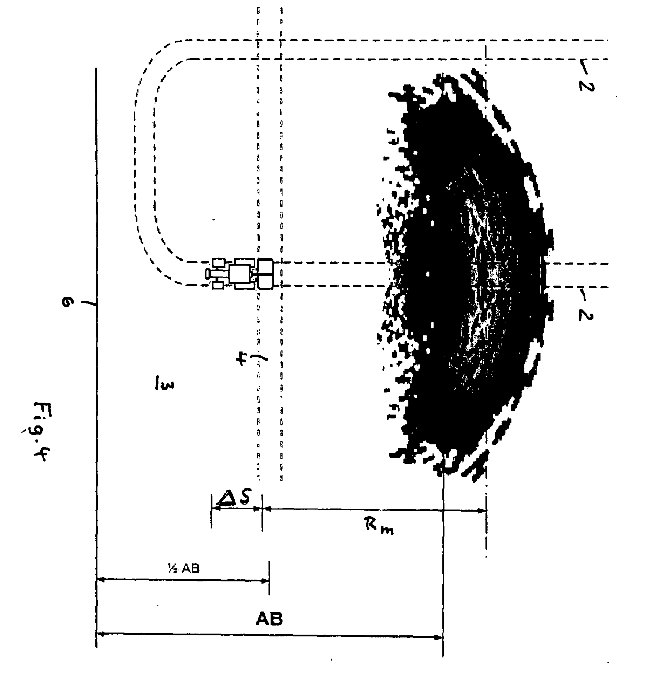

Bei der Fahrweise gemäß Fig. 4 kehrt das Streuergespann noch innerhalb des Vorgewendes 3, um in die nächste Feldfahrgasse 2 einzufahren. Der GPS-gesteuerte Einschaltpunkt der Dosierorgane liegt innerhalb des Feldes, wobei der Schwerpunkt der Düngerverteilung etwa auf der Feldgrenze zum Vorgewende liegt.

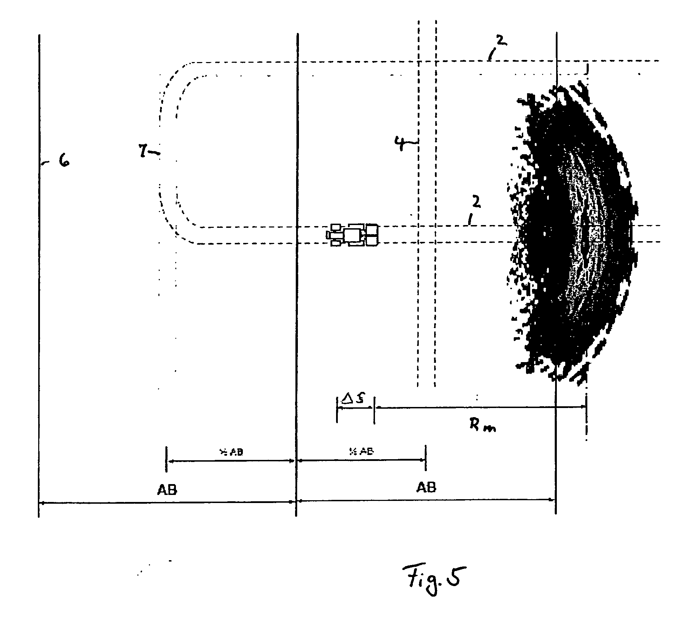

Gemäß Fig. 5 sind zwei parallele Vorgewendefahrgassen 4 und 7 angelegt. Bei der Feldausfahrt liegt der ermittelte Ausschaltpunkt wie bei der Fahrweise gemäß Fig. 4. Das Streuergespann fährt bis an die zweite Vorgewendefahrgasse heran, biegt in diese ein und verlässt diese zur erneuten Feldeinfahrt in Flucht dieser Fahrgasse. Der GPS-gesteuerte Einschaltpunkt der Dosierorgane liegt wiederum im Feldinneren.

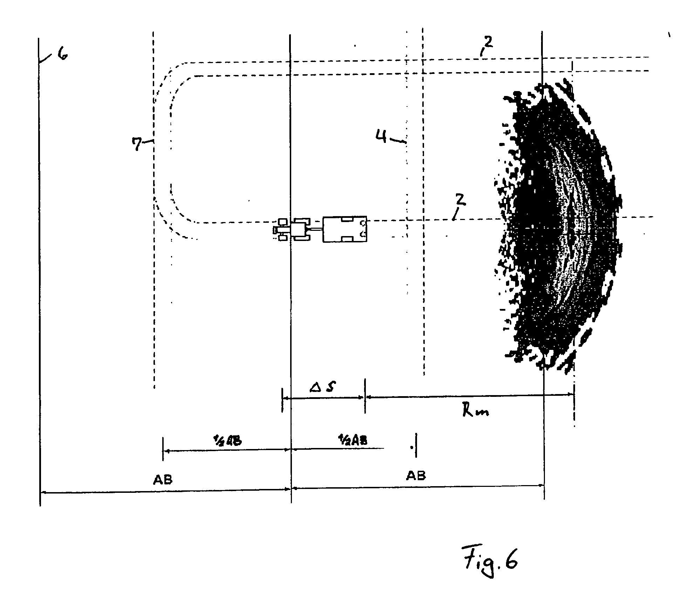

Fig. 6 zeigt die Fahrweise mit einem Streuerprogramm mit gezogenem Streuer. Hier ist stets eine zweite Vorgewendefahrgasse 7 erforderlich. Eine optimierte Düngerverteilung lässt sich mit einem solchen Gespann nur mit der ersten Strategie erreichen.

## Patentansprüche

1. Verfahren zum Verteilen von Mineraldünger auf dem Feld und im Vorgewende mittels Zweischeibenstreuern, deren rotierenden Streuscheiben der Mineraldünger aus einem Vorratsbehälter über Dosierorgane aufgegeben wird, wobei im Feld durch Anschlussfahren in parallelen Fahrgassen die etwa halbkreisförmige Düngerverteilung mit derjenigen der benachbarten Fahrgasse überlappt und in der Überlappungszone zwischen der halbkreisförmigen Düngerverteilung im Feld und der Düngerverteilung im Vorgewende die Düngerablage mittels GPS-gesteuerter Dosiercomputer, die die Dosierorgane mittels GPS-Signalen bei der Fahrt aus dem Feld in das Vorgewende ausschalten und bei der Fahrt vom Vorgewende in das Feld einschalten, unterbrochen bzw. wieder aufgenommen wird, **dadurch gekennzeichnet, dass** im Dosiercomputer zwei Strategien je nach Fahrweise des Landwirts und Anspruch an eine gute Düngerverteilung für die Ein- und Ausschaltung der Dosierorgane hinterlegt und wahlweise aufrufbar sind, von denen erstere einen GPS-gesteuerten Ausschalt- und Einschaltpunkt einstellt und eine aufgrund komplexe Rechenverfahren pro Düngersorte. Streuscheibentyp, Drehzahl der Streuscheiben und Arbeitsbreite (AB) ermittelte optimierte Düngerverteilung von der Feldausfahrt in das Vorgewende und bei der Einfahrt von diesem in das Feld ermöglicht und letztere einen GPS-gesteuerten Ausschaltpunkt einstellt, der die räumlichen Verhältnisse aus Traktorlänge, Streuerlänge und Einbiegeradius (Ri) bis zur Vorgewendefahrgasse berücksichtigt, und den Einschaltpunkt nach der ersten Strategie auf die optimierte Überlappung der Feldeinfahrt zum Vorgewende einstellt.

2. Verfahren nach Anspruch 1, **dadurch gekennzeichnet, dass** bei der ersten Strategie die optimierten Ausschalt- und Einschaltpunkte als Abstand (A, E) von der Feldgrenze (6) des Vorgewendes (3) bis zur Streuscheibenmitte in Abhängigkeit von der in den Dosiercomputer einzugebenden mittleren Wurfweite (Rm), die dem Abstand zwischen dem Schwerpunkt des gegen die Fahrtrichtung auf der Feldoberfläche liegenden Streufächers und der Mitte der Streuscheiben des Zweischeibenstreuers entspricht, für jeden Düngertyp, Streuscheibentyp und jede Arbeitsbreite intern ermittelt und eingestellt und bei externer Ermittlung in den Dosiercomputer eingegeben und eingestellt wird.

3. Verfahren nach Anspruch 2, **dadurch gekennzeichnet, dass** zusätzlich die Fahrgeschwindigkeit und die beim Streuen aktuelle Dosieröffnung in den Dosiercomputer eingegeben werden.

4. Verfahren nach Anspruch 1, **dadurch gekennzeichnet, dass** bei der zweiten Strategie auch bei gezogenem Streuer die Länge des Streuergespanns kon der Vorderachse Traktors bis zur Mitte der Streuscheiben und der Einbiegeradius in den Dosiercomputer eingegeben werden.

5. Verfahren nach einem der Ansprüche 1 bis 4, **dadurch gekennzeichnet, dass** bei der Fahrt im Vorgewende (3) der Zweischeibenstreuer zur Feldseite hin auf eine größere halbe Arbeitsbreite als die Arbeitsbreite in der Fahrgasse im Vorgewende eingestellt wird.

6. Verfahren nach Anspruch 5, **dadurch gekennzeichnet, dass** die Drehzahl der dem Feld (1) zugekehrten Streuscheibe erhöht wird.

7. Verfahren nach einem der Ansprüche 1 bis 6, **dadurch gekennzeichnet, dass** zur Feldgrenze (6) des Vorgewendes (3) hin der Zweischeibenstreuer auf Grenzstreuen eingestellt wird.

8. Verfahren nach einem der Ansprüche 1 bis 7, **dadurch gekennzeichnet, dass** mit ausreichendem Abstand zur Fahrgasse (4) des Vorgewendes (3) die Drehzahl der Streuscheiben merklich abgesenkt wird.

9. Verfahren nach Anspruch 8, **dadurch gekennzeichnet, dass** zusätzlich der Aufgabepunkt des Düngers auf die Streuscheiben geändert wird.

10. Verfahren nach Anspruch 8 oder 9, **dadurch gekennzeichnet, dass** zusätzlich die Dosiermenge reduziert wird.

## Claims

1. Method for distributing mineral fertilizer on a field and in the headland by means of twin disc spreaders, the rotating spreading discs of which are fed with the mineral fertilizer from a storage container via metering members, wherein, in the field, by driving in parallel tracks, the approximately semicircular distribution of fertilizer overlaps with that of the adjacent track, and, in the overlapping zone between the semicircular distribution of fertilizer in the field and the distribution of fertilizer in the headland, the depositing of fertilizer is interrupted or resumed by means of GPS-controlled metering computers which switch off the metering members by means of GPS signals upon travel out of the field into the headland and switch on the metering members upon travel from the headland into the field, **characterized in that** two strategies for switching on and switching off the metering members are stored in the metering computer and are optionally retrievable depending on the farmer's driving technique and requirement for good distribution of the fertilizer, the former of which sets a GPS-controlled switching-off and switching-on point and permits an optimized distribution of fertilizer, which is determined by fertilizer type, spreading disc type, rotational speed of the spreading discs and working width (AB) on the basis of complex calculating methods, from the field exit into the headland and upon entry from the latter into the field, and the latter of which sets a GPS-controlled switching-off point which takes into consideration the spatial ratios of tractor length, spreader length and swing-around radius (Ri) as far as the headland track, and sets the switching-on point in accordance with the first strategy to the optimized overlapping of the field entry with the headland.

2. Method according to Claim 1, **characterized in that**, in the first strategy, the optimized switching-off and switching-on points are internally determined and set as the distance (A, E) from the field boundary (6) of the headland (3) as far as the spreading disc centre depending on the average throwing range (Rm), which is to be input into the metering computer and corresponds to the distance between the centre of gravity of the spreading fan, which is located on the field surface counter to the direction of travel, and the centre of the spreading discs of the twin disc spreader, for each fertilizer type, spreading disc type and each working width, and, for external determination are input into the metering computer and set.

3. Method according to Claim 2, **characterized in that** the driving speed and the metering opening active during the spreading are additionally input into the metering computer.

4. Method according to Claim 1, **characterized in that**, in the second strategy, with the spreader also being drawn, the length of the spreader combination from the front axle of the tractor as far as the centre of the spreading discs, and the swinging-around radius are input into the metering computer.

5. Method according to one of Claims 1 to 4, **characterized in that**, during the travel in the headland (3), the twin disc spreader is set to a larger half working width towards the field side than the working width in the track in the headland.

6. Method according to Claim 5, **characterized in that** the rotational speed of the spreading disc facing the field (1) is increased.

7. Method according to one of Claims 1 to 6, **characterized in that** the twin disc spreader is set to boundary spreading towards the field boundary (6) of the headland (3).

8. Method according to one of Claims 1 to 7, **characterized in that** the rotational speed of the spreading discs is noticeably reduced at a sufficient distance of the headland (3) from the track (4).

9. Method according to Claim 8, **characterized in that** the feeding point of the fertilizer to the spreading discs is additionally changed.

10. Method according to Claim 8 or 9, **characterized in that** the metering rate is additionally reduced.

## Revendications

1. Procédé de répartition d'engrais minéral sur le champ et dans le bout de champ à l'aide d'épandeurs à double disque dont les disques d'épandage distribuent l'engrais minéral à partir d'un réservoir via des organes de dosage, l'épandage d'engrais se produisant selon une forme approximative de demi-cercle se chevauchant dans le champ, lors de la course de raccord permettant de relier les sillons de passage parallèles, avec le sillon de passage voisin concerné et le dépôt d'engrais étant activé, interrompu et/ou repris à l'aide d'un ordinateur de dosage piloté par GPS désactivant les organes de dosage par le biais des signaux GPS lors du passage de l'extérieur du champ dans le bout de champ et lors du passage du bout de champ dans le champ, **caractérisé en ce que** deux stratégies sont mémorisées dans l'ordinateur de dosage et peuvent être sélectionnées au choix en fonction du mode de conduite de l'agriculteur et de sa demande de bonne répartition de l'engrais régissant l'activation et la désactivation des organes de dosage, parmi lesquelles la première règle un point d'activation et de désactivation piloté par GPS et permet une répartition optimisée de l'engrais calculée sur la base d'un procédé complexe de calcul prenant en compte le type d'engrais utilisé, le type de disque d'épandage, la vitesse de rotation des disques d'épandage et la largeur de travail (AB) en partant de la sortie du champ jusque dans le bout de champ et du bout de champ dans le champ et la seconde réglant un point de désactivation piloté par GPS prenant en compte les relations dans l'espace entre la longueur du tracteur, la longueur d'épandage et le rayon de courbure (Ri) parcouru jusqu'au sillon de passage de bout de champ et réglant le point d'activation d'après la première stratégie sur un chevauchement optimisé de l'entrée dans le champ jusqu'au bout de champ.

2. Procédé selon la revendication 1, **caractérisé en ce que** selon la première stratégie, les points de désactivation et d'activation optimisés sont calculés et réglés en interne comme une distance (A, E) par rapport à la limite de champ (6) du bout de champ (3) jusqu'au centre des disques d'épandage en fonction de la largeur d'éjection (Rm) moyenne saisie dans l'ordinateur de dosage correspondant à la distance entre le point de gravité de l'éventail d'épandage opposé à la direction d'avancée sur la surface du champ et le centre des disques d'épandage de l'épandeur à double disque, pour chaque type d'engrais, chaque disque d'épandage et chaque largeur de travail, et saisie et réglée dans l'ordinateur de dosage en fonction de calculs externes.

3. Procédé selon la revendication 2, **caractérisé en ce que** l'on saisit en outre dans l'ordinateur de dosage la vitesse d'avancée et le degré d'ouverture de l'ouverture de dosage concrètement utilisé lors de l'épandage.

4. Procédé selon la revendication 1, **caractérisé en ce que** selon la seconde stratégie, l'on saisit dans l'ordinateur de dosage la longueur de l'étendue d'épandage, épandeur sorti, allant de l'essieu avant du tracteur jusqu'au centre des disques d'épandage ainsi que le rayon de courbure.

5. Procédé selon l'une quelconque des revendications 1 à 4, **caractérisé en ce que** lors du passage dans le bout de champ (3), l'épandeur à double disque est réglé, dans le bout de champ, en direction du côté du champ, de façon à couvrir une largeur de travail moitié moins importante que la largeur de travail couverte dans le sillon de passage.

6. Procédé selon la revendication 5, **caractérisé en ce que** la vitesse de rotation du disque d'épandage orienté vers le champ (1) est accrue.

7. Procédé selon l'une quelconque des revendications 1 à 6, **caractérisé en ce que** l'épandeur à double disque est réglé de façon à effectuer un épandage limité en direction de la limite de champ (6) du bout de champ (3).

8. Procédé selon l'une quelconque des revendications 1 à 7, **caractérisé en ce que** la vitesse de rotation des disques d'épandage est sensiblement réduite à une distance suffisante du sillon de passage (4) du bout de champ (3).

9. Procédé selon la revendication 8, **caractérisé en ce que** le point d'amenée de l'engrais sur le disque d'épandage est en outre modifié.

10. Procédé selon la revendication 8 ou 9, **caractérisé en ce que** la quantité de dosage est en outre réduite.
